# EUROPÄISCHE PATENTSCHRIFT

(11) **EP 0 446 742 B1**
(45) Veröffentlichungstag und Bekanntmachung des Hinweises auf die Patenterteilung: **30.08.1995**
(21) Anmeldenummer: 91103180.5
(22) Anmeldetag: 02.03.1991
(51) Int. Cl.: B23K 11/00, B23H 1/04

(54) **Verfahren und Einrichtung zum Herstellen von Mikro-Schmelzstrukturen aus elektrisch leitendem Material auf Sondenspitzen sowie deren Verwendung**
Method and apparatus for manufacturing welded electrically-conductive microstructures on probe heads and use thereof
Méthode et appareil de réalisation de micro-structures fusibles et conductrices sur des têtes de sonde, et leur utilisation

(30) Priorität: 08.03.1990 DE 4007292
(43) Veröffentlichungstag der Anmeldung: 18.09.1991
(73) Patentinhaber: FORSCHUNGSZENTRUM JÜLICH GMBH, 52425 Jülich (DE)
(72) Erfinder: Lemke, Heiko, W-6303 Hungen (DE); Göddenhenrich, Thomas, W-5170 Jülig (DE); Bochem, Hans-Peter, W-5170 Jülich (DE); Hartmann, Uwe, Dr., W-5162 Niederzier (DE)

(56) Entgegenhaltungen:
- EP-A- 0 027 517
- WO-A-89/07999
- DE-A- 2 259 719
- PATENT ABSTRACTS OF JAPAN vol. 13, no. 385 (M-864)(3733) 25. August 1989 & JP-A-1 135 430 ( FUJITSU LTD ) 29. Mai 1989

## Beschreibung

Die Erfindung bezieht sich auf ein Verfahren zur Herstellung von Mikro-Schmelzstrukturen aus elektrisch leitendem Material auf einer elektrisch leitenden Sondenspitze. Unter Mikro-Schmelzstrukturen werden Materialteile verstanden, die durch Aufschmelzen geringer Materialmengen und Erstarren des aufgeschmolzenen Materials im homogenen Zustand der Schmelze gebildet werden. Die Erfindung geht von einem Verfahren aus, bei dem das Material im elektrischen Feld aufgeschmolzen wird, wobei Sondenspitze und Material als Elektrode und Gegenelektrode an einer Spannungsquelle angeschlossen sind. Gegenstand der Erfindung ist auch eine Einrichtung zur Durchführung des Verfahrens.

Sondenspitzen mit homogenen Eigenschaften an ihrem Spitzenende werden vor allem bei Verwendung der Sondenspitzen bei Rasterkraft- oder Rastertunnelmikroskopen angestrebt, bei denen die Sondenspitzen als Rasternadeln im Van der Waals'schen Wechselwirkungsfeld oder im magnetischen Feld oder als Tunnelspitzen zur Messung des Tunnelstroms benötigt werden, s. EP-A-0 027 517. Die Eigenschaften solcher Sondenspitzen müssen für derartige Anwendungen ausreichend definiert sein, um den mit dem Rastermikroskop im Rasterpunkt ermittelten Meßwert mit gewünschter Präzision qualitativ und quantitativ auswerten zu können. Es hat sich gezeigt, daß Mikro-Schmelzstrukturen am Spitzenende von Sondenspitzen nicht nur entsprechend gewünschte gleichartige Eigenschaften aufweisen, sondern aus einer homogenen Schmelze auch reproduzierbar herstellbar sind.

Aufgabe der Erfindung ist es, ein Verfahren zur Herstellung von Mikro-Schmelzstrukturen an Sondenspitzen zu schaffen, bei dem die Mikro-Schmelzstrukturen mit homogenen und reproduzierbaren Eigenschaften erzielt werden können.

Diese Aufgabe wird ausgehend vom eingangs genannten Verfahren gemäß der Erfindung durch die in Patentanspruch 1 angegebenen Maßnahmen gelöst. Danach wird zunächst das Material, das die Mikro-Schmelzstruktur bilden soll, als eine dünne Folie aufgespannt. Die Folie ist als Elektrode geschaltet und hierzu elektrisch mit einem der Pole einer Spannungsquelle verbunden. Mit dem anderen Pol der Spannungsquelle ist die Sondenspitze verbunden, die nun mit der Folie in Berührung gebracht wird. Die elektrische Spannung, die dabei zwischen Sondenspitze und Folie anliegt, ist so eingestellt, daß das Folienmaterial bei seiner Berührung mit der Sondenspitze aufgrund des dann fließenden Stroms unter Wärmeentwicklung im Bereich der Sondenspitze aufschmilzt und sich infolge der in der Schmelze wirksam werdenden Oberflächenkräfte an der Sondenspitze kugelförmig zusammenzieht. Der elektrische Kontakt zwischen Sondenspitze und Folie reißt beim Anlagern des geschmolzenen Materials an der Sondenspitze und Ablösen vom übrigen, noch fest bleibenden Folienmaterial ab, der Strom wird unterbrochen, das jetzt an der Sondenspitze haftende Material erstarrt unter Ausbildung der Mikro-Schmelzstruktur. Die Größe der dabei erzeugten Mikrokugel an der Sondenspitze wird bestimmt von der aufgeschmolzenen Materialmenge, die in erster Linie abhängig ist von der Foliendicke, von der Höhe der angelegten Spannung und vom Zeitintervall, innerhalb dessen unter beibehaltener Spannung Strom fließt. Die einzuhaltenden Parameterwerte für die jeweils erforderlichen Materialpaarungen von Folien- und Sondenmaterial und die gewünschte Größe der Mikro-Schmelzstruktur werden empirisch ermittelt.

Um die Mikro-Schmelzstrukturen an der Sondenspitze klein zu halten und geringe Krümmungsradien an den Spitzenenden zu erzeugen, sind möglichst dünne Folien einzusetzen. Zur mechanischen Stabilisierung und besseren Handhabung solcher Folien, ist das Folienmaterial nach Patentanspruch 2 auf einer elektrisch isolierend wirkenden Unterlage aufgebracht, die als Träger des Folienmaterials dient.

In weiterer Ausbildung der Erfindung wird zum Aufschmelzen des Folienmaterials eine Pulsspannung an Sondenspitze und Folien angelegt, Patentanspruch 3. Je kürzer die Zeitspanne für den Spannungspuls gewählt ist, umso weniger Folienmaterial wird aufgeschmolzen. Wegen der Feinheit von Sondenspitze und Folienmaterial und wegen der gewünschten Bildung von Mikro-Schmelzstrukturen nur am Spitzenende der Sondenspitze ist es zweckmäßig, Sondenspitze und Folie unter Beobachtung im Elektronenmikroskop einander anzunähern, Patentanspruch 4.

Für das Ausbilden der Mikroschmelzstrukturen werden bevorzugt Sondenspitzen verwendet, die elektrolytisch durch Eintauchen eines Sondendrahtes in eine elektrolytisch wirksame Flüssigkeitsschicht aus einer Elektrolytlösung hergestellt sind und dabei zumindest von einem elektrisch isolierend wirksamen Isolator umgeben sind, Patentanspruch 5. Solche Sondenspitzen weisen sehr feine Spitzenenden mit geringen Krümmungsradien und in engen Grenzen variierende Eigenschaften und Strukturen auf.

Zur Durchführung des erfindungsgemäßen Verfahrens wird von einer Einrichtung ausgegangen, bei der Sondenspitze und Material, aus dem die Mikro-Schmelzstruktur ausgebildet werden soll, als Elektrode und Gegenelektrode an einer Spannungsquelle angeschlossen sind. Die erfindungsgemäße Einrichtung ist nach Patentanspruch 6 dadurch gekennzeichnet daß für das Material eine Folie verwendet wird, die an einem elektrisch leitfähigen Materialträger elektrisch leitend aufgespannt ist. Der Materialträger ist an einem der Pole der Spannungsquelle angeschlossen. Darüber hinaus sind Sondenspitze und Materialträger gegeneinander beweglich derart angeordnet, daß Sondenspitze und Folienoberfläche unter elektrischer Spannung in Berührung zu bringen sind.

Zweckmäßig ist das Folienmaterial auf einer elektrisch isolierend wirkenden Unterlage aufgebracht, und die Unterlage unter Beibehaltung der erforderlichen elektrischen Verbindung zwischen Folienmaterial und Materiplträger am Materialträger befestigt, Patentanspruch 7. Zur Mikrobewegung von Sondenspitze und/oder Materialträger eignet sich ein piezoelektrisch bewegbares Bewegungselement, Patentanspruch 8.

Weitere Ausbildungen der erfindungsgemäßen Einrichtung sind in Patentansprüchen 9 bis 11 angegeben. Danach ist ein regelbarer Pulsspannungsgeber als Spannungsquelle vorgesehen, mit dem es möglich ist, die Pulslänge für die erforderliche Spannung zum Schmelzen der gewünschten Materialmenge einzustellen. Vorteilhaft ist es, Sondenspitze und Folie im Beobachtungsbereich eines Elektronenmikroskopes einander anzunähern. Um die Qualität der am Spitzenende der Sondenspitze erzeugten Mikro-Schmelzstruktur unmittelbar nach deren Herstellung prüfen zu können, weist die Einrichtung ein Analysengerät für die an der Sondenspitze gebildete Mikro-Schmelztruktur auf.

Sondenspitzen, die nach dem erfindungsgemäßen Verfahren hergestellt worden sind, sind bevorzugt als Rasternadeln in Rasterkraft- oder Rastertunnelmikroskopen geeignet.

Die Erfindung wird nachfolgend anhand von Ausführungsbeispielen näher erläutert. Die Zeichnung zeigt im einzelnen folgende Figuren:
- Figur 1: Einrichtung zur Herstellung von Mikro-Schmelzstrukturen an Sondenspitzen;
- Figur 2: Elektronenmikroskopische Aufnahme einer Sondenspitze in geringem Abstand zu einer an einem Materialträger aufgespannten Folie;
- Figur 3: Elektronenmikrosyopische Aufnahme einer Sondenspitze mit aufgeschmolzener Mikro-Schmelzstruktur;
- Figur 4: Einrichtung zur elektrolytischen Herstellung von Sondenspitzen;
- Figur 5: Einrichtung zur elektrolytischen Herstellung von Sondenspitzen mittels einer Ringelektrode, an der eine aus einer Elektrolytlösung gebildete Flüssigkeitsmembran aufgespannt ist.

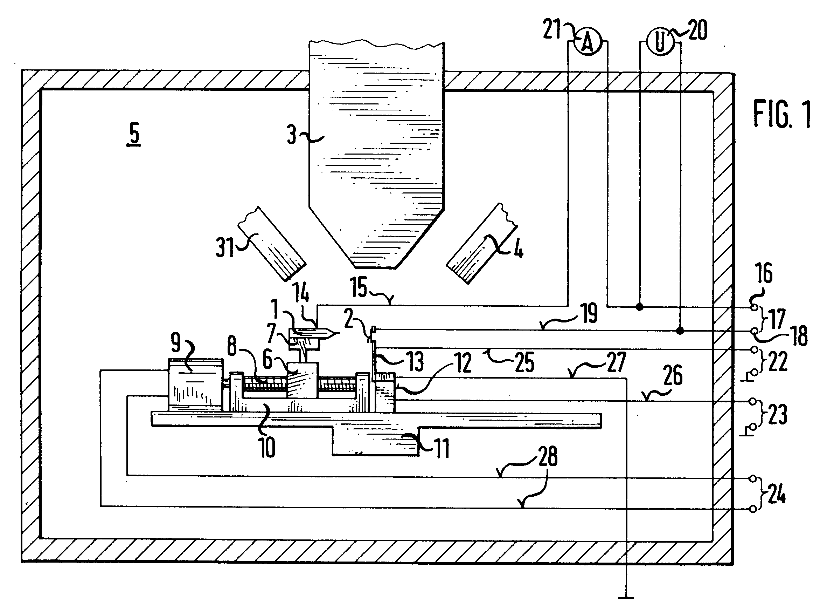

In Figur 1 ist schematisch eine Einrichtung zur Herstellung von Mikro-Schmelzstrukturen an Sondenspitzen wiedergegeben, bei der sich eine Sondenspitze 1 und als Folie 2 aufgespanntes Material zur Ausbildung der Mikro-Schmelzstruktur am Spitzenende der Sondenspitze 1 im Beobachtungsbereich eines Elektronenmikroskops mit Polschuh 3 und Detektor 4 innerhalb einer Vakuumkammer 5 einander annähern lassen. Als Bewegungseinrichtung für die Sondenspitze dient im Ausführungsbeispiel ein Positionierer 6, der eine Halterung 7 zur Befestigung der Sondenspitze 1 trägt. Mit dem Positionierer 6 läßt sich die Sondenspitze 1 in Richtung auf die Folie 2 (x-Richtung) und senkrecht dazu nach oben und unten (z-Richtung) bewegen. In z-Richtung wird die in der Halterung 7 eingespannte Sondenspitze 1 vom Positionierer 6 angehoben oder gesenkt, in x-Richtung erfolgt die Bewegung über eine den Positionierer 6 verschiebende Spindel 8 mit Feinstgewinde, deren Rotation über einen Antriebsmotor 9 steuerbar ist. Der Antriebsmotor und eine Spindelhalterung 10 sind auf einer Arbeitsplatte 11 befestigt.

Im Ausführungsbeispiel ist auch die Folie 2 bewegbar, die Bewegung erfolgt mittels eines piezoelektrischen Bewegungselementes 12, das einerseits mit der Arbeitsplatte 11 fest verbunden ist und andererseits einen Folienträger 13 zum Einspannen der Folie 2 aufweist. Mit dem piezoelektrischen Bewegungselement 12 läßt sich die Folie 2 in x-, y-und z-Richtung bewegen. Während mit dem Positionierer 6 eine grobe Vororientierung von Sondenspitze 1 und Folie 2 erreicht wird, wird die Feinbewegung im Ausführungsbeispiel mit dem piezoelektrischen Bewegungselement 12 durchgeführt.

Die Sondenspitze 1 weist einen elektrischen Anschluß 14 auf, über den die Sondenspitze mittels einer elektrischen Verbindung 15 mit einem Pol 16 einer Spannungsquelle 17 verbunden ist. Ein zweiter Pol 18 der Spannungsquelle 17 ist mittels einer elektrischen Leitung 19 am Folienträger 13 angeschlossen, an dem die Folie elektrisch leitend befestigt ist. Die Spannungsquelle 17 ist im Ausführungsbeispiel als regelbarer Pulsspannungsgeber ausgebildet, der Spannungswert läßt sich sowohl der Höhe nach als auch hinsichtlich der wirksamen Zeitspanne (Pulslänge) einstellen. Die jeweils zwischen Sondenspitze 1 und Folie 2 wirksame Spannung U wird mit einem Voltmeter 20, der fließende Strom I mit einem Amperemeter 21 meßbar.

Zur Bewegung des piezoelektrischen Bewegungselementes 12 dienen Steuerspannungsgeber 22, 23, zur Ansteuerung des Antriebsmotors 9 ist ein Steuerspannungsgeber 24 vorgesehen. Mit den Steuerspannungsgebern 22, 23 ist das piezoelektrische Bewegungselement 12 über Anschlußkabel 25, 26 verbunden, der bei Anlegen der Steuerspannungen fließende Steuerstrom wird über eine Erdleitung 27 abgeführt Der Antriebsmotor 9 ist am Steuerspannungsgeber 24 über eine elektrische Verbindungsleitungen 28 angeschlossen.

Im Ausführungsbeispiel wird auf einer Sondenspitze aus Wolfram eine Mikro-Schmelzstruktur aus Nickel aufgebracht. Als Träger und Unterlage für die Nickelfolie, die ca. 20 nm stark ist, dient ein ca. 30 nm dicker Lackfilm Zur Bearbeitung der Sondenspitze 1 wird diese zunächst über den Positionierer 6 auf die im Folienträger 13 aufgespannte Folie 2 zu bewegt und in ihrer Stellung zur Folie grob vorpositioniert. Die Feinbewegung bis zur Berührung von Sondenspitze und Folienoberfläche erfolgt anschließend mit Hilfe der Bewegung des Folienträgers 13 mittels des piezoelektrischen Bewegungselementes 12.

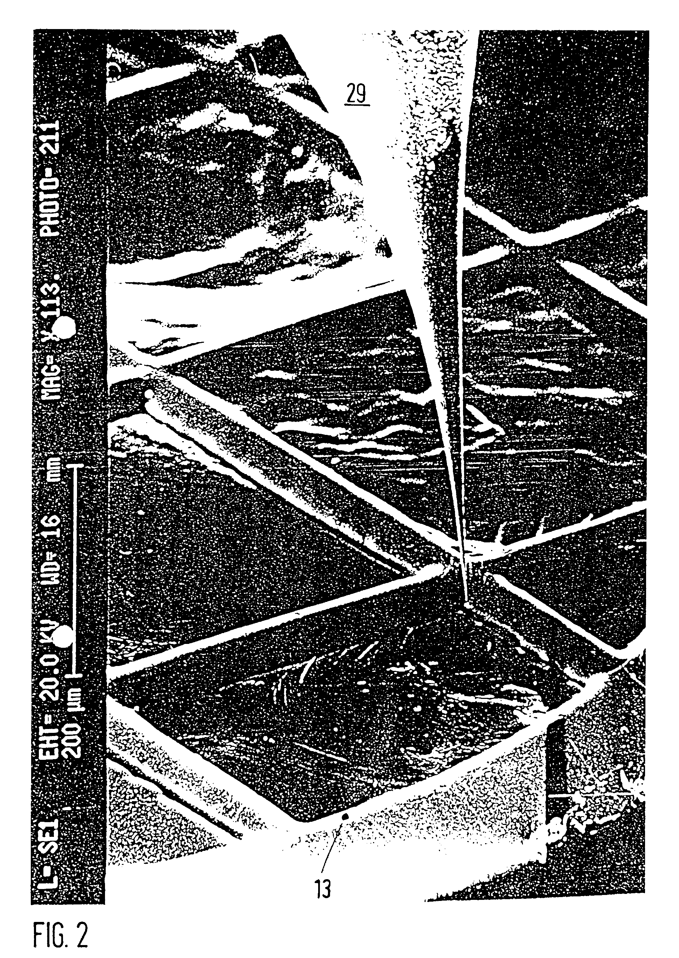

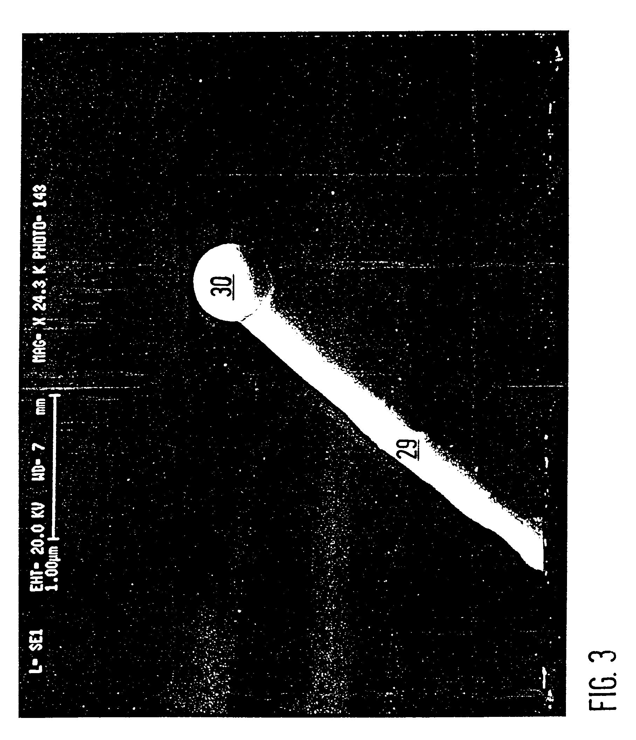

In einer Position der Sondenspitze noch vor Berührung der Folienoberfläche ist die Sondenspitze in einer elektronenmikroskopischen Aufnahme in Figur 2 gezeigt. Die Sondenspitze 1 befindet sich mit ihrem Spitzenende 29 in nur noch geringer Entfernung vor der Folie 2, die am Folienträger 13 elektrisch leitend aufgespannt ist. Vor Berührung zwischen Sondenspitze und Folie wird im Ausführungsbeispiel eine Spannung U von U = 10 V zwischen Sondenspitze und Folie angelegt. Die Folie wird dann auf das Spitzenende der Sondenspitze hin bewegt bis die Folienoberfläche mit der Sondenspitze in Kontakt gebracht ist. Beim Kontakt fließt ein Kurzschlußstrom, der nach Aufschmelzen des Folienmaterials im Bereich der Berührungsstelle zwischen Folienoberfläche und Sondenspitze und nach Ausbildung der kugelförmigen Mikro-Struktur aus der Schmelze unter Wirkung der Oberflächenspannung wieder abreißt. Dabei erstarrrt die Mikro-Schmelzstruktur und bleibt am Spitzenende der Sondenspitze haften. Eine elektronenmikroskopische Aufnahme einer gebildeten Mikrokugel 30 aus Nickel an der Wolfram-Sondenspitze ist in Figur 3 gezeigt. Der Kugelradius der Mikrokugel beträgt nur einige 10 bis einige 100 nm, im Ausführungsbeispiel etwa 200 nm. Bei der Herstellung der Mikro-Schmelzstruktur wurde in der Vakuumkammer 5 ein Druck von 133,3 x 10⁻⁵ Pa (1 x 10⁻⁵ Torr) eingehalten.

Im Ausführungsbeispiel befindet sich innerhalb der Vakuumkammer 5 auch ein Analysegerät 31 zur Analyse der gebildeten Mikro-Schmelzstruktur. Mit dem Analysegerät 31 wird unmittelbar nach Erstarren der an der Sondenspitze erzeugten Mikrokugel deren Materialreinheit und die erhaltene Oberflächenstruktur untersucht.

Von der gewählten Foliendicke, von der Höhe der angelegten Spannung U ist die aufgeschmolzene Materialmenge an der Stelle der Berührung zwischen Sondenspitze und Folienoberfläche abhängig. Im Ausführungsbeispiel wurde eine Spannung von U = 10 Volt eingestellt. Mit dieser Einstellung konnten Mikrokugeln aus Nickel mit gut reproduzierbaren Eigenschaften auf Wolfram-Sondenspitzen aufgebracht werden. Neben Nickel und Wolfram sind auch andere Materialpaarungen geeignet, beispielsweise Nickel/ Nickel, Eisen/Wolfram, etc. Die für diese Materialpaarungen notwendigen Parameter für Foliendicke, Spannungswert und Pulslänge sind empirisch zu ermitteln.

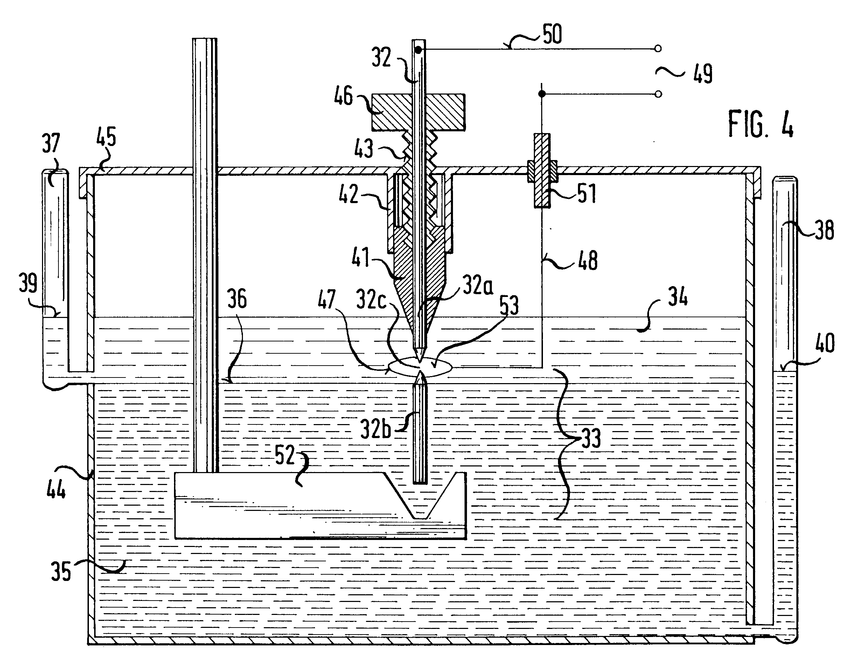

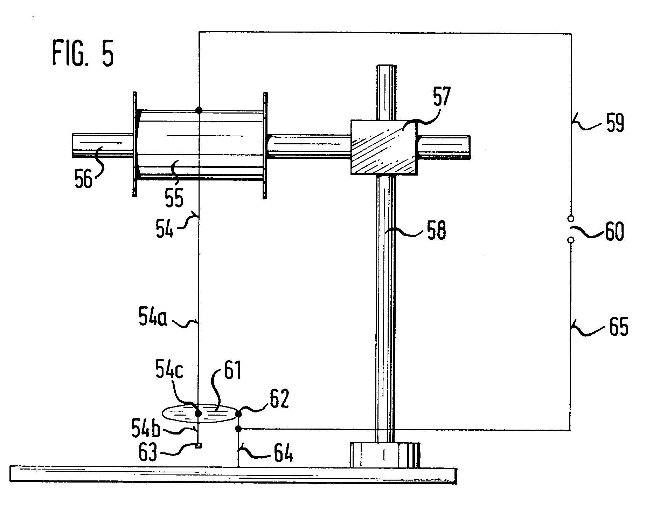

Zur Herstellung von Sondenspitzen, die in der Einrichtung nach Figur 1 wegen ihrer Form und Feinheit bevorzugt eingesetzt werden, dienen in Figuren 4 und 5 gezeigte Einrichtungen.

In Figur 4 ist schematisch eine Einrichtung zur elektrolytischen Herstellung von Sondenspitzen dargestellt, bei der ein zur Ausbildung der Sondenspitzen zu bearbeitender Sondendraht 32 in ein zweischichtiges Flüssigkeitsbad 33 eingetaucht wird. Die beiden Flüssigkeitsschichten werden von einer Elektrolytlösung 34 und als elektrischer Isolator von einer Isolierflüssigkeit 35 gebildet. Die Isolierflüssigkeit weist ein höheres spezifisches Gewicht als die Elektrolytlösung auf. Die Elektrolytlösung ist somit oberhalb der Isolierflüssigkeitsschicht angeordnet. Eine zwischen Elektrolytlösung und Isolierflüssigkeit ausgebildete Flüssigkeitsgrenze 36 wird im Ausführungsbeispiel über mit Elektrolytlösungsschicht und Isolierflüssigkeitsschicht kommunizierenden Röhren 37, 38 eingestellt. Die Höhe der Flüssigkeitsspiegel 39, 40 in beiden kommunizierenden Röhren gibt jeweils ein Maß für die Stärke von Elektrolytlösungs- bzw. Isolierflüssigkeitsschicht an, wobei für die Flüssigkeitsgrenze 36 bei Einstellung ihrer Höhe über die mit der Isolierflüssigkeit in Verbindung stehende kommunizierende Röhre 38 der auf der Isolierflüssigkeit lastende Druck der Elektolytlösung zu berücksichtigen ist. Der Flüssigkeitsspiegel 40 ist in der kommunizierenden Röhre 38 um den Druck der Elektrolytlösung höher angeordnet, als es der Flüssigkeitsgrenze 36 im Flüssigkeitsbad 33 entspricht.

Der in das Flüssigkeitsbad 33 eintauchende Sondendraht 32, weist ein an einer Halterung 41 eingespanntes Ende 32a, ein freies Ende 32b und einen Drahtbereich auf, der zur Ausbildung einer Sondenspitze vorgesehen ist. Der zuletzt genannte Drahtbereich wird im folgenden Bearbeitungsbereich 32c des Sondendrahtes 32 genannt. Der Sondendraht 32 ist hinsichtlich seiner tatsächlichen Abmessungen in Figur 4 stark schematisiert wiedergegeben. In realiter wird zur Ausbildung der Sondenspitzen von sehr dünnen Sondendrähten mit Drahtdurchmessern von etwa 100 »m ausgegangen. Relativ zur Darstellung der Gesamteinrichtung nach Figur 4 ist der Draht gegenüber der Halterung in seinen Abmessungen somit sehr verzerrt wiedergegeben.

Das Ende 32a des Sondendrahtes 32 ist in der Halterung 41 fest eingespannt. Die Halterung 41 ist in einer Schiene 42 verschieblich gelagert und über eine Spindel 43 bewegbar, die am Gehäuse 44 des Flüssigkeitsbades 33 im Deckel 45 geführt ist. Bei einer Drehung einer Verstellmutter 46 an der Spindel 43 bewegt sich die Halterung 41 nach oben oder unten und führt damit den Draht 32 im Flüssigkeitsbad 33 in dementsprechender Richtung.

In die Elektrolytlösungsschicht taucht im Ausführungsbeispiel eine Ringelektrode 47 ein, die mittels einer elektrischen Verbindungsleitung 48 an einer Spannungsquelle 49 angeschlossen ist. Die Gegenelektrode im Elektrolyten bildet der Bearbeitungsbereich 32c des Sondendrahtes 32 durch einen elektrischen Anschluß am Gegenpol der Spannungsquelle 49 über die Anschlußleitung 50. Die Verbindungsleitung 48 ist an ihrer Durchführung 51 gegenüber dem Sondendraht 32 als elektrischer Leiter elektrisch isoliert eingesetzt.

In das Flüssigkeitsbad 33 ist noch eine Auffangwanne 52 eingebracht, die innerhalb der Isolierflüssigkeitsschicht 35 unter das freie Ende 32b des Drahtes 32 geschoben wird, damit das freie Ende nach elektrolytischer Bearbeitung des Bearbeitungsbereiches und dabei erfolgender Abtrennung vom Bearbeitungsbereich 32c innerhalb des Flüssigkeitsbades aufgefangen und mittels der Auffangwanne 52 entnommen werden kann.

Werden die Ringelektrode 47 und der Sondendraht 32 mit der Spannungsquelle 49 verbunden, wird das Drahtmaterial infolge der dann elektrolytisch wirksamen Flüssigkeitsschicht 53 zwischen Ringelektrode und Sondendraht im Bearbeitungsbereich 32c abgetragen. Der Drahtdurchmesser im Bearbeitungsbereich verringert sich. Während des Materialabtrags übt unter Schwerkrafteinwirkung das Eigengewicht des freien Endes 32b des Drahtes 32 eine Zugkraft aus, die den Bearbeitungsbereich 32c bei sich verringerndem Drahtdurchmesser immer stärker dehnt. Am Ende der Bearbeitung reißt der Sondendraht 32, das freie Ende 32b fällt in die Auffangwanne 52. Unter Verwendung von 0,5 molarer Natronlauge als Elektrolytlösung und einer Ringelektrode 47 aus Platin mit einem Ringdurchmesser d = 5 mm wurden aus einem Wolframdraht mit einem Ausgangsdurchmesser von 100 »m paraboloidartig geformte Sondenspitzen mit Spitzenradien von etwa 10 nm erzeingt. Dabei wurde der Wolframdraht zunächst im Wechselspannungsbetrieb elektrolytisch bis auf eine Stärke von 50 »m abgeätzt. Danach wurde im Gleichspannungsbetrieb weitergearbeitet, wobei der Wolframdraht als Anode, die Platinringelektrode als Kathode geschaltet war. Es wurden bei der Bearbeitung Polierbedingungen eingestellt, die Spannung U betrug U = 5 V, der Strom I wies einen Wert von I = 25 mA auf.

In Figur 5 ist eine Einrichtung zur elektrolytischen Herstellung von Sondenspitzen wiedergegeben, bei der in gleicher Weise wie bei der Einrichtung nach Figur 4 ein Sondendraht 54 mit einem geführten Ende 54a einem freien Ende 54b und einem Bearbeitungsbereich 54c elektrolytisch bearbeitet wird. Der Sondendraht 54 ist auf einer drehbaren Drahtrolle 55 aufgewickelt und beim Drehen der Drahtrolle bewegbar. Die Drahtrolle 55 ist auf einer Achse 56 rotierbar gelagert, die Achse 56 wird über ein Ankerkreuz 57 von einem Stativ 58 abgestützt. Der Draht 54 steht mittels einer elektrischen Leitung 59 elektrisch leitend mit einer der Elektroden einer Spannungsquelle 60 in Verbindung.

Bei der Einrichtung nach Figur 5 durchstößt der Draht 54 mit seinem freien Ende 54b eine als Flüssigkeitsmembran 61 an einer Ringelektrode 62 aufgespannte Elektrolytlösungsschicht. Das freie Ende 54b ist mit einem Gewicht 63 beschwert, um den Sondendraht 54 während seiner elektrolytischen Bearbeitung zu spannen. Die Ringelektrode 62 wird über eine gegenüber dem Stativ 58 elektrisch isolierte Befestigung 64 abgestützt und ist über eine elektrische Leitung 65 an einer Gegenelektrode der Spannungsquelle 60 angeschlossen.

Zur Bearbeitung eines Wolframdrahtes wurde eine 0,3 molare Natronlauge benutzt, die sich als Flüssigkeitsmembran an der Ringelektrode 62 aufspannen läßt. Der Ringdurchmesser der Ringelektrode, die aus Platin bestand, betrug 5 mm. Der zu bearbeitende Wolframdraht war 50 »m stark. Die Bearbeitung des Wolframdrahtes erfolgt unter elektrolytischen Polierbedingungen, wobei Spannung und Strom den vorgenannten Werten für die Bearbeitung in der Einrichtung nach Figur 4 entsprachen. Die in der Flüssigkeitsmembran bearbeitete Wolframsonde wies nach ihrer Bearbeitung einen Spitzenradius von 50 nm auf.

## Patentansprüche

1. Verfahren zur Herstellung von Mikro-Schmelzstrukturen aus elektrisch leitendem Material auf einer elektrisch leitenden Sondenspitze durch Aufschmelzen des Materials im elektrischen Feld, wobei das Material als Elektrode und die Sondenspitze als Gegenelektrode an einer Spannungsquelle angeschlossen werden und das Material als dünne Folie ausgespannt wird und Sondenspitze und Folienoberfläche unter einer derart bemessenen elektrischen Spannung miteinander in Berührung gebracht werden, daß eine vorgegebene Materialmenge der Folie am Berührungspunkt zwischen Sondenspitze und Folie kugelförmig aufschmilzt.

2. Verfahren nach Anspruch 1,
**dadurch gekennzeichnet,**
daß das Folienmaterial auf einer elektrisch isolierend wirkenden Unterlage aufgebracht wird.

3. Verfahren nach Anspruch 1 oder 2,
**dadurch gekennzeichnet,**
daß die elektrische Spannung, unter der sich Sondenspitze und Folie berühren, eine vorgegebene Zeitspanne lang aufrechterhalten wird (Pulsspannung).

4. Verfahren nach Anspruch 1, 2 oder 3,
**dadurch gekennzeichnet,**
daß die Annäherung von Sondenspitze und Folie unter Beobachtung im Elektronenmikroskop durchgeführt wird.

5. Verfahren nach einem der Ansprüche 1 bis 4,
**dadurch gekennzeichnet,**
daß Sondenspitzen, die elektrolytisch durch Eintauchen eines Sondendrahtes in eine elektrolytisch wirksame Flüssigkeitsschicht aus einer Elektrolytlösung hergestellt sind und dabei zumindest von einem elektrisch isolierend wirksamen Isolator umgeben sind, verwendet werden.

6. Einrichtung zur Herstellung von Mikro-Schmelzstrukturen aus elektrisch leitendem Material auf einer Sondenspitze durch Aufschmelzen des Materials im elektrischen Feld nach Patentanspruch 1, wobei Sondenspitze und Material als Elektrode und Gegenelektrode an einer Spannungsquelle angeschlossen sind, das Material als Folie (2) ausgebildet und elektrisch leitend an einem elektrisch leitfähigen Folienträger (13) aufgespannt ist, der an einem der Pole (18) der Spannungsquelle (17) angeschlossen ist, und Sondenspitze (1) und Folienträger (13) gegeneinander derart beweglich angebracht sind, daß Sondenspitze und Folienoberfläche unter elektrischer Spannung miteinander in Berührung gebracht werden können.

7. Einrichtung nach Anspruch 6,
**dadurch gekennzeichnet,**
daß das Folienmaterial auf einer elektrisch isolierend wirkenden Unterlage aufgebracht ist, die am Folienträger (13) unter Beibehaltung der elektrisch leitenden Verbindung zwischen Folienträger (13) und Folienmaterial befestigt ist.

8. Einrichtung nach Anspruch 6 oder 7,
**dadurch gekennzeichnet,**
daß zur Mikrobewegung von Sondenspitze (1) und/oder Folienträger (13) ein piezoelektrisch bewegbares Bewegungselement (12) vorgesehen ist.

9. Einrichtung nach einem der Ansprüche 6, 7 oder 8 ,
**dadurch gekennzeichnet,**
daß zur Erzeugung der zwischen Sondenspitze (1) und Folie (2) wirkenden elektrischen Spannung U ein regelbarer Pulsspannungsgeber als Spannungsquelle (17) eingesetzt ist.

10. Einrichtung nach einem der vorhergehenden Ansprüche 6 bis 9,
**dadurch gekennzeichnet,**
daß sich Sondenspitze (1) und Folie (2) bei ihrer Annäherung im Beobachtungsbereich eines Elektronenmikroskops befinden.

11. Einrichtung nach einem der vorhergehenden Ansprüche 6 bis 10,
**dadurch gekennzeichnet,**
daß ein Analysegerät (31) zur Materialanalyse des auf die Sondenspitze (1) übertragenen Materials vorgesehen ist.

## Claims

1. Method for producing microstructures, by fusing, of electrically conducting material on an electrically conducting probe tip by melting the material in an electric field, the material being connected to a voltage source as one electrode and the probe tip being connected thereto as the opposite electrode, the material being stretched in the form of a thin film and the probe tip and the film surface being brought into contact with each other at an electric voltage dimensioned such that a predetermined amount of the material in the film melts in the shape of a cone at the point of contact between the probe tip and the film.

2. Method according to Claim 1, characterized in that the film material is applied on a support having electrically insulating action.

3. Method according to Claim 1 or 2, characterized in that the electric voltage at which the probe tip and the film touch is maintained for a predetermined period of time (pulsed voltage).

4. Method according to Claim 1, 2 or 3, characterized in that the probe tip and the film are brought together under observation using an electron microscope.

5. Method according to one of Claims 1 to 4, characterized in that use is made of probe tips which are produced electrolytically by dipping a probe wire into an electrolytically active liquid layer of an electrolyte solution and in this case are enclosed at least by an insulator having electrically insulating action.

6. Device for producing microstructures, by fusing, of electrically conducting material on a probe tip by melting the material in an electric field, according to Patent Claim 1, the probe tip and material being connected to a voltage source as the electrode and opposite electrode, the material being formed as a film (2) and being clamped, in an electrically conducting manner, on an electrically conductive film holder (13) which is connected to one of the poles (18) of the voltage source (17), and the probe tip (1) and film holder (13) being mounted, so that they can be moved with respect to one another, such that the probe tip and the film surface can be brought into contact with each other at an electric voltage.

7. Device according to Claim 6, characterized in that the film material is applied on a support having electrically insulating action which is fastened on the film holder (13) while maintaining the electrically conducting connection between the film holder (13) and the film material.

8. Device according to Claim 6 or 7, characterized in that a piezoelectrically movable moving element (12) is provided for micromovement of the probe tip (1) and/or of the film holder (13).

9. Device according to one of Claims 6, 7 or 8, characterized in that a controllable pulsed-voltage generator is used as the voltage source (17) for producing the electric voltage U acting between the probe tip (1) and the film (2).

10. Device according to one of the preceding Claims 6 to 9, characterized in that, when they are brought together, the probe tip (1) and the film (2) are in the observation region of an electron microscope.

11. Device according to one of the preceding Claims 6 to 10, characterized in that an analyser (31) is provided for material analysis of the material transferred onto the probe tip (1).

## Revendications

1. Procédé pour fabriquer des microstructures fusibles réalisées en un matériau électriquement conducteur sur une pointe de sonde électriquement conductrice par fusion du matériau dans un champ électrique, selon lequel on raccorde le matériau en tant qu'électrode et la pointe de sonde en tant que contre-électrode à une source de tension et on tend le matériau sous la forme d'une feuille mince et on place la pointe de sonde et la surface de la feuille en contact réciproque, et ce sous une tension électrique dimensionnée de telle sorte qu'une quantité prédéterminée du matériau de la feuille fond en formant une bille au niveau du point de contact entre la pointe de la sonde et la feuille.

2. Procédé selon la revendication 1, caractérisé en ce qu'on dépose le matériau de la feuille sur un support ayant une action électriquement isolante.

3. Procédé selon la revendication 1 ou 2, caractérisé en ce qu'on maintient la tension électrique, sous laquelle la pointe de la sonde et la feuille sont en contact, pendant un intervalle de temps prédéterminé (tension impulsionnelle).

4. Procédé selon la revendication 1, 2 ou 3, caractérisé en ce qu'on rapproche la pointe de la sonde et la feuille, moyennant une observation au microscope électronique.

5. Procédé selon l'une des revendications 1 à 4, caractérisé en ce qu'on utilise des pointes de sonde, qui sont fabriquées par voie électrolytique par immersion d'un fil de sonde dans une couche liquide ayant un effet électrolytique, à partir d'une solution électrolytique et qu'on les entoure au moins par un isolateur ayant une action électriquement isolante.

6. Dispositif pour fabriquer des microstructures fusibles formées d'un matériau électriquement conducteur sur une pointe de sonde par fusion du matériau dans un champ électrique selon la revendication 1, dans lequel on raccorde la pointe de sonde et le matériau en tant qu'électrode et contre-électrode à une source de tension, que le matériau est formé en tant que feuille (2) et est tendu, à l'état électriquement conducteur, sur un support électriquement conducteur de feuille (13), qui est raccordé à l'un des pôles (18) de la source de tension (17), et la pointe de sonde (1) et le support de feuille (13) sont montés de manière à être déplaçable l'un par rapport à l'autre de telle sorte que la pointe de sonde et la surface de la feuille peuvent être placées en contact réciproque sous l'application d'une tension électrique.

7. Procédé selon la revendication 6, caractérisé en ce que le matériau de la feuille est disposé sur un support ayant une action électriquement isolante et qui est fixé sur le support de feuille (13) moyennant le maintien de la liaison électriquement conductrice entre le support de feuille (13) et le matériau de la feuille.

8. Procédé selon la revendication 6 ou 7, caractérisé en ce qu'un élément de déplacement (12) pouvant être déplacé par voie piézoélectrique est prévu pour le microdéplacement de la pointe de sonde (1) et/ou du support de feuille (13).

9. Procédé selon l'une des revendications 6, 7 ou 8, caractérisé en ce que pour la production de la tension électrique (U), qui agit entre la pointe de sonde (1) et la feuille (2), on utilise un générateur réglable de tension impulsionnelle en tant que source de tension (17).

10. Procédé selon l'une des revendications 6 à 9, caractérisé en ce que la pointe de sonde (1) et la feuille (2) sont situées, dans leur position rapprochée, dans la zone d'observation d'un microscope électronique.

11. Procédé selon l'une des revendications 6 à 10 précédentes, caractérisé en ce qu'un appareil d'analyse (31) est prévu pour l'analyse du matériau transféré à la pointe de sonde (1).
